Europäisches Patentamt

European Patent Office

Office européen des brevets

(11) Veröffentlichungsnummer: **0 288 665 B1**

(12) **EUROPÄISCHE PATENTSCHRIFT**

(45) Veröffentlichungstag der Patentschrift: **10.07.91**

(51) Int. Cl.⁵: **B60K 41/04**, F16H 1/455, B60K 23/04

(21) Anmeldenummer: **88101456.7**

(22) Anmeldetag: **02.02.88**

(54) **Anordnung zur Steuerung der Kraftübertragung eines Kraftfahrzeugs.**

(30) Priorität: 29.04.87 DE 3714332

(43) Veröffentlichungstag der Anmeldung:
02.11.88 Patentblatt 88/44

(45) Bekanntmachung des Hinweises auf die Patenterteilung:
10.07.91 Patentblatt 91/28

(84) Benannte Vertragsstaaten:
**DE FR GB IT SE**

(56) Entgegenhaltungen:
**DE-A- 3 437 435**
**DE-A- 3 437 436**

(73) Patentinhaber: **Dr.Ing.h.c. F. Porsche Aktiengesellschaft**
**Porschestrasse 42**
**W-7000 Stuttgart 40(DE)**

(72) Erfinder: **Armbrust, Eberhard, Dipl.-Ing.**
**Kronenstrasse 5**
**W-7253 Renningen(DE)**
Erfinder: **Bantle, Manfred, Dipl.-Ing.**
**Eichendorffstrasse 115**
**W-7143 Vaihingen/Enz(DE)**
Erfinder: **Munz, Volker, Dipl.-Ing.**
**Nettelbeckstrasse 5**
**W-7140 Ludwigsburg(DE)**
Erfinder: **Zackl, Bernd, Dipl.-Ing.**
**Adlerstrasse 15**
**W-7251 Friolzheim(DE)**
Erfinder: **Dietz, Mattias, Dipl.-Ing.**
**Kilianstrase 20**
**W-7120 Bietigheim-Bissingen(DE)**

Rank Xerox (UK) Business Services

## Beschreibung

Die Anordnung betrifft eine Vorrichtung nach dem Oberbegriff des Hauptanspruchs, die z.B. aus der DE-C- 39 37 436 bekannt ist.

Bei mehrachsigen, leistungsstarken Kraftfahrzeugen oder solchen, bei denen eine Achse stärker belastet ist als eine weitere, führt ein Lastwechsel beim Befahren einer Kurve häufig zu einem mehr oder weniger starken, instabilen Fahrverhalten. Befährt der Fahrer des Kraftfahrzeugs beispielsweise eine Kurve und geht dann plötzlich vom Fahrpedal, so kann ein damit einhergehender Ruck im Antriebsstrang, insbesondere beim entlasteten kurveninneren Rad der Antriebsachse zum Verlust der Haftreibung zwischen diesem Rad und der Fahrbahn führen. An dieser Achse steht dann im allgemeinen nur noch die halbe Querführungskraft zur Verfügung, so daß dies bei höheren Querbeschleunigungen zu einem Eindrehen bei heckgetriebenen oder hecklastigen Allradfahrzeugen bzw. zu einem Schieben des Fahrzeugs über die Vorderräder (Verlassen der Kurve in tangentialer Richtung) bei frontgetriebenen oder frontlastigen Allradfahrzeugen führt.

Es ist zwar bekannt, bei Kraftfahrzeugen zum Vermeiden eines Verlusts der Haftreibung der angetriebenen Räder sperrbare oder selbsttätig sperrende Differentiale einzusetzen. Deren Wirkung setzt jedoch erst nach Verlust der Haftreibung ein, so daß dem beschriebenen Eindrehen bzw. dem Verlassen der Kurve nicht ausreichend wirksam begegnet werden kann.

Es ist ebenfalls bekannt, das Lastwechselverhalten eines Kraftfahrzeugs durch konstruktive Maßnahmen zu verbessern, beispielsweise, indem man durch Verlagerung von Aggregaten oder Achsanordnungspunkten für eine ausgeglichenere Achslastverteilung sorgt oder aufwendige Achskonstruktionen einsetzt. Dies führt jedoch häufig zu Raumproblemen im Fahrzeug oder verschlechtert unter Umständen das Eigenlenkverhalten des Fahrzeugs derart, daß das Fahrzeug im Grenzbereich nicht mehr kontrollierbar ist bzw. ein gewisser selbststabilisierender Einfluß, wie er beispielsweise bei einem Fahrzeug mit außermittig verschobenem Massenschwerpunkt gegeben ist, nicht mehr vorhanden ist.

Es ist deshalb Aufgabe der Erfindung, ein Kraftfahrzeug der oben genannten Gattung derart weiterzubilden, daß das Lastwechselverhalten beim Befahren von Kurven, insbesondere im Kurvengrenzbereich entscheidend verbessert wird.

Die Aufgabe ist durch die kennzeichnenden Merkmale des Anspruchs 1 gelöst. Weitere, die Erfindung in vorteilhafter Weise ausgestaltende Merkmale sind in den Unteransprüchen enthalten.

Die Vorteile der Erfindung sind in erster Linie im verbesserten Lastwechselverhalten beim Befahren von Kurven zu sehen und darin, daß gegenüber einer konventionellen Steueranordnung für sperrbare Differentiale keine zusätzlichen Signale erfaßt und verarbeitet werden müssen.

Ein Einsatz von kontinuierlich in ihrer Sperrwirkung ansteuerbaren Sperrdifferentialen in Kraftfahrzeugen ist beispielsweise aus der DE-C- 34 37 435, der DE-C- 34 37 436 und der DE-A- 36 08 059 und dem Artikel von H. Bott und M. Bantle "Der Porsche Typ 959 - Gruppe B - ein besonderes Automobil" - Teil 2, ATZ 88 (1986), Heft 6, Seiten 353 bis 356 bekannt und näher beschrieben.

Es hat sich gezeigt, daß das Eindrehverhalten eines derartigen allradgetriebenen Automobils bei Lastwechsel in Kurven durch permanentes, teilweises Ansteuern (beispielsweise 20 % Sperrwirkung) des sperrbaren Querdifferentials entscheidend verbessert werden konnte. Um hierbei jedoch zu große Verspannungen im Differential bei höheren Geschwindigkeiten zu vermeiden, kann der Ansteuerwert abhängig vom Überschreiten einer Leistungsschwelle bei beispielsweise 50 % Vollast auf 5 % Sperrwirkung reduziert werden, ohne daß sich dies wiederum negativ auf das Eindrehverhalten auswirkt.

Zur Verbesserung der Lenkbarkeit bei niedriger Geschwindigkeit (Rangierbarkeit) und niedriger Motorleistung kann es ferner zweckmäßig sein, unterhalb der Leistungsschwelle bzw. unterhalb von beispielsweise 20 km/h die Sperrwirkung gänzlich aufzuheben und in einem Geschwindigkeitsbereich zwischen beispielsweise 20 km/h und 50 km/h auf den höheren Ansteuerwert von 20 % bzw. den leistungsabhängig bestimmten Ansteuerwert anzuheben.

Die Erfindung ist beispielhaft anhand von Zeichnungen erläutert und wird nachstehend näher beschrieben.

Es zeigt

Fig. 1     ein Schemabild einer Antriebseinheit eines Kraftfahrzeugs,

Fig. 2     ein Prinzipschaltbild eines Steuergeräts mit Eingangs- und Ausgangsgrößen,

Fig. 3     ein Blockschaltbild eines auf dem Steuergerät implementierten Steuerverfahrens,

Fig. 4     ein Flußdiagramm eines Steuerprogramms zur Realisierung des Steuerverfahrens auf einem Mikrorechner.

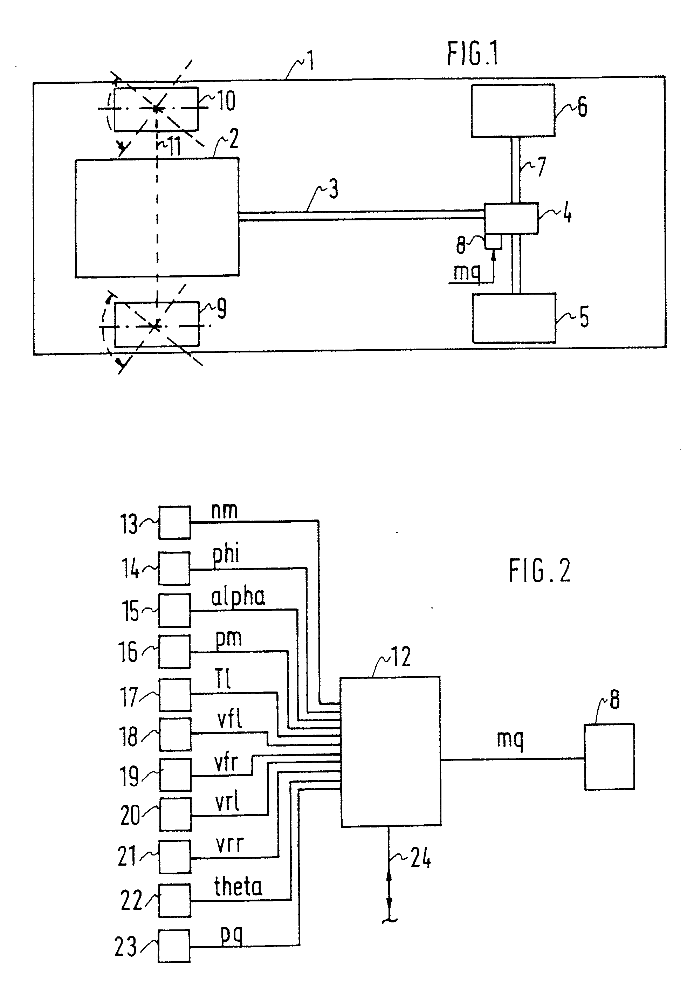

In Fig. 1 ist mit 1 ein Kraftfahrzeug gezeigt, dessen Brennkraftmaschine 2 über eine nicht gezeigte Kupplungs-Getriebeeinheit und eine Welle 3 und ein kontinuierlich in seiner Sperrwirkung steuerbares Differential 4 Räder 5, 6 einer Achse 7 antreibt. Das Differential wird hierzu mittels eines Stellglieds 8 in Abhängigkeit von einer Steuergröße mq betätigt. Räder 9, 10 einer weiteren Achse 11 sind in nicht notwendiger Weise nicht angetrieben. Das gezeigte Schemabild stellt jedoch nur ein Beispiel ohne Einschränkung der Allgemeinheit von bekannten Antriebssystemen dar. Bei Allradfahrzeugen wird sich die Steuerung jedoch im allgemeinen auf die Hauptantriebsachse beschränken.

Ein Steuergerät 12 (siehe Fig. 2) zur Bereitstellung der Steuergröße mq für das Stellglied 8 ist vorzugsweise in Mikrorechnertechnik aufgebaut und beispielsweise mit einem Intel-Mikrorechner vom Typ 8051 (Ein-Chip-Mikrorechner) mit allen zu seinem Betrieb notwendigen externen Bauelementen sowie externen, zusätzlichen RAM- und ROM-Bausteinen (nicht gezeigt) ausgetattet. Das Steuergerät erhält hierzu Signale von einem Motor-Drehzahlgeber 13 (Motordrehzahl nm), einem Fahrpedalgeber 14 (Fahrpedalstellung phi) oder einem Drosselklappenwinkelgeber 15 (Drosselklappenwinkel alpha) bei Brennkraftmaschinen mit Turbolader zusätzlich von einem Ladedruckgeber 16 (Ladedruck pm) und einem Ladelufttemperaturgeber (Ansauglufttemperatur T1) und von Drehzahlgebern 18, 19, welche Signale entsprechend der Drehzahl oder Geschwindigkeit der nichtangetriebenen Räder 9 (Drehzahl links vorne, vfl) und 10 (Drehzahl rechts vorne, vfr) abgeben (bei Allradfahrzeugen: Drehzahlen der Räder an der Zusatzantriebsachse oder wahre Fahrzeuggeschwindigkeit über Grund). Als weitere Größen können noch von Drehzahlgebern 20, 21 Drehzahlen der Räder 5, 6 (Drehzahl links hinten, vrl; Drehzahl rechts hinten, vrr) und/oder von einem Lenkwinkelgeber 22 (Lenkwinkel theta) und/oder von einem Druckgeber 23 (Steuerdruck pq) am Differential zum Zwecke einer Druckregelung erfaßt und dem Steuergerät 12 zugeführt werden. Über eine Datenleitung 24 kann das Steuergerät 12 auch mit weiteren Steuergeräten, beispielsweise einem Antiblockiersystem-Steuergerät kommunizieren, welches die Signale der Geber 18 bis 21 erfaßt und aufbereitet. Diese Signale können dann dem Steuergerät 12 über die Datenleitung 24 übermittelt werden, so daß die Geber 18 bis 21 entfallen.

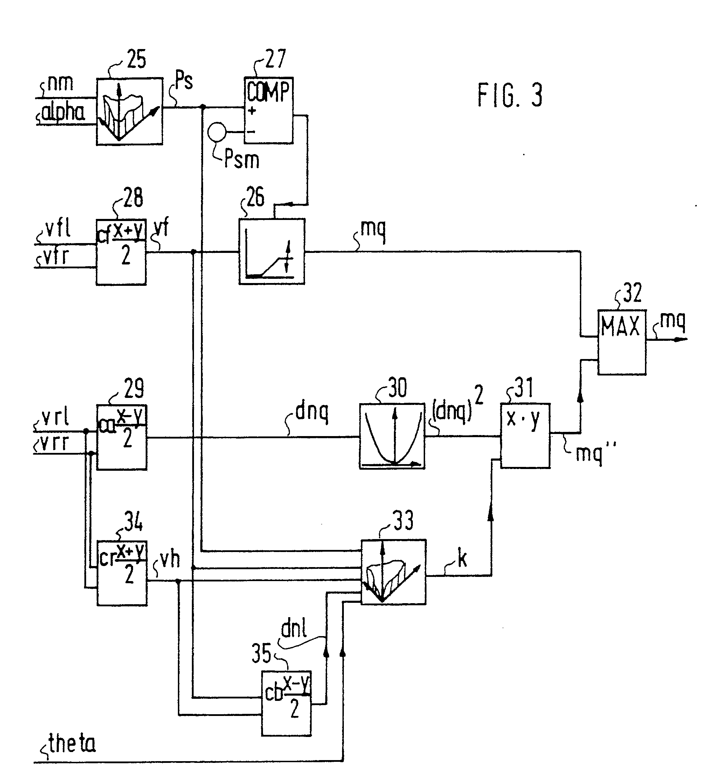

In Fig. 3 ist anhand eines Blockschaltbilds die Funktion des Steuergeräts 12, d. h., die Bereitstellung der Steuergröße mq in Abhängigkeit von den Eingangsgrößen gezeigt. Über ein Kennfeld 25 wird aus der Motordrehzahl nm und der Fahrpedalstellung phi (nicht gezeigt) bzw. Drosselklappenwinkel alpha eine Solleistung Ps bestimmt, welche bei Brennkraftmaschinen mit Turboladern zusätzlich vom Ladedruck pm und der Ansauglufttemperatur Tl abhängt (ebenfalls nicht gezeigt). Ein Kennlinienfeld 26 gibt eine erste Steuergröße $mq'$ ab. Die der ersten Steuergröße $mq'$ zugrundegelegte Kennlinie aus dem Kennlinienfeld 26 wird durch einen Vergleicher 27 angewählt, welcher die Solleistung Ps mit einem im mittleren Bereich des von der Brennkraftmaschine verfügbaren Leistungsbands, vorzugsweise bei 50 % der Maximalleistung Psmax liegenden Leistungswert Psm vergleicht. Ist Ps kleiner als Psm, so entspricht die Steuergröße $mq'$ einer ersten, einem höheren Sperrwert (beispielsweise 20 % Sperrwirkung) bewirkenden Steuergröße $mq'h$; ist Ps größer als Psm, so entspricht die Steuergröße $mq'$ einer zweiten, einen niedrigeren Sperrwert (beispielsweise 5 % Sperrwirkung) bewirkenden Steuergröße $mq'n$.

Über dieses Kennlinienfeld 26 ist der Steuergröße $mq'$ zusätzlich eine geschwindigkeitsabhängige Charakteristik aufprägbar, wozu aus den Drehzahlen vfl, vfr der nicht angetriebenen Räder 5, 6 über eine Mittelwertbildung 28 die Geschwindigkeit vf des Fahrzeugs bestimmt wird. Zumindest bei Ps kleiner Psm wird in einem ersten Geschwindigkeitsbereich zwischen 0 km/h und einer Geschwindigkeit vfa (entsprechend 20 km/h) die erste Steuergröße gleich 0 gesetzt, und in einem zweiten, daran anschließenden Geschwindigkeitsbereich (zwischen vfa und vfb, ensprechend beispielsweise 50 km/h) kontinuierlich bis auf den leistungsabhängig vorbestimmten Wert angehoben. Bei Ps größer Psm kann es unter Umständen sinnvoll sein, die geschwindigkeitsabhängige Charakteristik zu unterdrücken und immer den niedrigeren Sperrwert auszugeben.

Die Ansteuerung der Differentialsperre 4 wird jedoch noch wirkungsvoller, wenn der obenen beschriebenen a-priori-Steuerung (wirkt im Vorfeld zur Verhinderung des Eindrehens) eine a-posteriori-Regelung der Drehzahldifferenz dnq der Räder 5, 6 der Antriebsachse 7 (wirkt beim Auftreten von Drehzahldifferenzen diesen entgegen) überlagert wird; eine solche ist in den oben genannten Offenlegungs- und Patentschriften bereits näher beschrieben, so daß auf die Bereitstellung eines diese repräsentierenden zweiten Steuerwerts $mq''$ nur kurz eingegangen werden soll.

Hierzu wird über eine Differenzbildung 29 aus den Geschwindigkeiten vrl, vrr der Räder 5, 6 der angetriebenen Achse die Drehzahldifferenz dnq (entspricht der Drehzahldifferenz an den Ausgangswellen des Differentials, bis auf einen konstanten Faktor) bestimmt. Von dieser Drehzahldifferenz dnq wird eine Potenz 30, vorzugsweise jedoch das Quadrat ($dnq^2$) gebildet. Aus deren bzw. dessen Produkt 31 mit einem Faktor k ergibt sich der zweite Steuerwert $mq''$, welcher in einer Maximalwertauswahl 31, welche die endgültige Ansteuergröße mq zur Ansteuerung des Stellglieds 8 ausgibt, mit dem ersten Steuerwert $mq'$ vergleicht und den größeren der beiden Werte $mq'$, $mq''$ der Ansteuergröße mq zuordnet.

Der Faktor k kann entweder konstant sein oder über ein Kennfeld 33 aus der Solleistung Ps und/oder der Fahrzeuggeschwindigkeit vf und/oder der über eine Mittelwertbildung 34 ermittelten Geschwindigkeit vh der Antriebsräder und/oder der aus der Differenz 35 der beiden Geschwindigkeiten bestimmten Differenzdrehzahl dnl und/oder dem Lenkwinkel theta ermittelt werden.

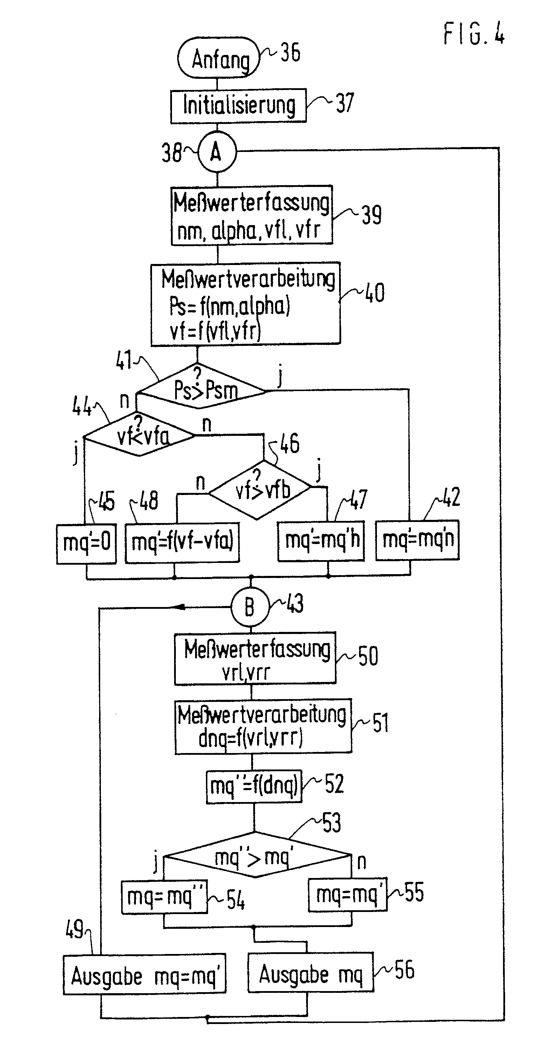

In Fig. 4 ist schließlich noch eine programmseitige Realisierung der Steuerung anhand eines Flußdiagramms gezeigt.

Das Programm beginnt bei 36 und erreicht nach einem Initialisierungsschritt 37, bei dem die Speicher und Programmzähler zurückgesetzt werden, eine Marke A, 38. Von dort erfolgt zunächst die Meßwerterfassung 39 der von den Sensoren 13, 14 oder 15, 18 und 19 (und unter Umständen 16, 17) gelieferten Meßwerte. Im nachfolgenden Programmschritt erfolgt die Meßwertverarbeitung 40, d. h., dort werden die Solleistung Ps und die Geschwindigkeit vf aus den Größen nm, alpha (oder theta und pl, Tm) und vfl und vfr bestimmt.

In einer Abfrage 41 wird bestimmt, ob die Solleistung Ps größer als der Leistungswert Psm ist. Wenn ja, wird der erste Ansteuerwert $mq'$ zur der dem niedrigeren Sperrwert entsprechenden Steuergröße $mq'n$ gesetzt, 42 und zur Marke B, 43, weiterverzweigt.

Ist die Abfrage 41 negativ, so wird als nächstes abgefragt, ob vf im niedrigeren Geschwindigkeitsbereich liegt, 44. Wenn ja, wird der erste Ansteuerwert $mq'$ zu 0 gesetzt, 45, und zur Marke B, 42, fortgeschritten.

Wenn nein, wird zur nächsten Abfrage 46 weiterverzweigt, welche überprüft, ob vf oberhalb des zweiten Geschwindigkeitsbereichs liegt. Ist dies der Fall, so wird der erste Ansteuerwert $mq'$ auf die dem höheren Sperrwert ensprechende Steuergröße $mq'n$ gesetzt, 47 und zur Marke B, 42 weitergegangen. Ist dies nicht der Fall, so wird der erste Ansteuerwert entsprechend der Beziehung $mq' = f(vf\text{-}vfa)$ bestimmt, 48 und zur Marke B, 43 gesprungen.

Von der Marke B, 43 erfolgt entweder direkt der Rücksprung zur Marke A, 38 unter Ausgabe des Ansteuerwerts $mq'$, 49, oder falls der a-priori-Steuerung die a-posteriori-Regelung überlagert werden soll, eine Meßwerterfassung 49 der Werte vrl, vrr und eine Meßwertverarbeitung 51 dieser Werte zur Bestimmung der Drehzahldifferenz dnq = f(vrl, vrr) an den Rädern der angetriebenen Achse.

Nach der Bildung der zweiten Steuergröße $mq'' = f(dnq)$, beispielsweise entsprechend dem Quadrat der Drehzahldifferenz dnq, 52, erfolgt eine Abfrage 53, ob die zweite Steuergröße $mq''$ größer als die erste Steuergröße $mq'$ ist. Wenn ja, wird die Steuergröße mq entsprechend der zweiten Steuergröße $mq''$ gesetzt, 54, wenn nein, gleich der ersten Steuergröße, 55. Von beiden Zweigen erfolgt der Rücksprung zur Marke A, 38, unter Ausgabe des Steuerwerts mq an das Stellglied 8, 56. Von der Marke A, 38, beginnt der Programmdurchlauf von neuem.

## Ansprüche

1. Anordnung zur Steuerung der Kraftübertragung auf wenigstens eine mit einem sperrbaren Differential (4) versehene Achse (7) eines Kraftfahrzeugs, wobei das Differential (4) über ein von einem vorzugsweise mit einem Mikrorechner ausgerüsteten Steuergerät (12) angesteuerten Stellglied (8) in Abhängigkeit von Betriebs- und/oder Fahrparametern kontinuierlich in seiner Sperrwirkung steuerbar ist und eine Leistung (Solleistung Ps) einer Brennkraftmaschine (2) als steuernder Betriebsparameter dient, dadurch gekennzeichnet, daß das Steuergerät (12) das Stellglied (8) bis zu einem im mittleren Bereich des von der Brennkraftmaschine (2) verfügbaren Leistungsbands (0 kleiner Ps kleiner oder gleich Psmax) liegenden Leistungswert (Psm) mit einem ersten, einem höheren Sperrwert entsprechenden Wert ($mq'h$) einer ersten Steuergröße ($mq'$) und oberhalb dieses Leistungswerts (Psm) mit einem zweiten, einem niedrigeren Sperrwert entsprechenden Wert ($mq'n$) einer Steuergröße ($mq'$) beaufschlagt.

2. Anordnung nach Anspruch 1, dadurch gekennzeichnet, daß als weiterer, steuernder Parameter der Fahrparameter Fahrzeuggeschwindigkeit (vf) hinzukommt, wobei in einem ersten niedrigen Geschwindigkeitsbereich (0 kleiner oder gleich vf kleiner oder gleich vfa) die Sperrwirkung aufgehoben und in einem zweiten, höheren Geschwindigkeitsbereich (vfa kleiner vf kleiner oder gleich vfb) die Steuergröße ($mq'$) von (0) beginnend, mit wachsender Geschwindigkeit (vf) auf die dem leistungsabhängig vorbestimmten Sperrwert entsprechende Steuergröße ($mq' = mq'n$, $mq' = mq'h$) angehoben wird.

3. Anordnung nach Anspruch 1 oder 2, dadurch gekennzeichnet, daß der Ansteuergröße ($mq'$) eine weitere Steuergröße ($mq''$) überlagert wird, welche wenigstens von einer Funktion der Drehzahldifferenz (dnq) an den Ausgangswellen (7) des Differentials (4) abhängt.

4. Anordnung nach Anspruch 3, dadurch gekennzeichnet, daß die weitere Steuergröße ($mq''$) zusätzlich von einer Funktion der Leistung (Ps) und/oder einer Drehzahldifferenz (dnl) zwischen den Rädern zweier Achsen des Kraftfahrzeugs und/oder einem Lenkwinkel (theta) abhängt.

5. Anordnung nach Anspruch 3 oder 4, dadurch gekennzeichnet, daß die Funktion der Drehzahldifferenz (dnq) einer Potenz, vorzugsweise dem Quadrat der Drehzahldifferenz (dnq) an den Ausgangswellen (7) des Differentials (4) entspricht.

6. Anordnung nach wenigstens einem der vorangehenden Ansprüche 3 bis 5, dadurch gekennzeichnet, daß das Stellglied (8) jeweils mit dem größeren Wert der beiden Steuergrößen ($mq'$, $mq''$) angesteuert wird.

7. Anordnung nach wenigstens einem der vorangehenden Ansprüche, dadurch gekennzeichnet, daß der Leistungswert (Psm) im Bereich von ca. 50 %, der höhere Sperrwert bei 20 % Sperrwirkung und der niedrigere Sperrwert bei 5 % Sperrwirkung liegt.

8. Anordnung nach wenigstens Anspruch 2, dadurch gekennzeichnet, daß der niedrigere Geschwindigkeitsbereich zwischen 0 km/h und 20 km/h und der höhere Geschwindigkeitsbereich zwischen 20 km/h und 50 km/h liegt.

## Claims

1. An arrangement for controlling the transmission of power to at least one axle (7), provided with a lockable differential (4), of a motor vehicle, wherein the locking action of the differential (4) is continuously controllable as a function of operating and/or driving parameters via a final control element (8), controlled by a control mechanism (12) which is preferably equipped with a microcomputer, and an output (nominal output Ps) of an internal-combustion engine (2) serves as controlling operating parameter, characterised in that the control mechanism (12) acts upon the final control element (8) with a first value ($mq'h$), corresponding to a higher locking value, of a first control factor ($mq'$), up to an output value (Psm) lying in the mean range of the output band (Ps greater than 0 and less than or equal to Psmax) available from the internal-combustion engine, and, above this output value (Psm), with a second value ($mq'n$), corresponding to a lower locking value, of a control factor ($mq'$).

2. An arrangement according to Claim 1, characterised in that a further controlling parameter - the driving parameter of vehicle speed (vf) - is added, the locking action being cancelled out in a first low speed range (vf greater than or equal to 0 and less than or equal to vfa) and, in a second higher speed range (vf greater than vfa and less than or equal to vfb), the control factor ($mq'$) being raised from (0) with increasing speed (vf) to the control factor ($mq' = mq'n$, $mq = mq'h$) which corresponds to the locking value predetermined as a function of output.

3. An arrangement according to Claim 1 or 2, characterised in that the control factor ($mq'$) is overlaid by a further control factor ($mq''$) which is at least dependent on a function of the rotational-speed difference (dnq) at the output shafts (7) of the differential (4).

4. An arrangement according to Claim 3, characterised in that the further control factor ($mq''$) is additionally dependent on a function of the output (Ps) and/or on a rotational-speed difference (dnl) between the wheels of two axles of the motor vehicle and/or on a steering angle (theta).

5. An arrangement according to Claim 3 or 4, characterised in that the function of the rotational-speed difference (dnq) corresponds to a power, preferably the square, of the rotational-speed difference (dnq) at the output shafts (7) of the differential (4).

6. An arrangement according to at least one of the preceding Claims 3 to 5, characterised in that the final control element (8) is in each case controlled with the greater value of the two control factors ($mq'$, $mq''$).

7. An arrangement according to at least one of the preceding claims, characterised in that the output value (Psm) lies in the region of approx. 50 %, the higher locking value is approximately 20 % locking action and the lower locking value is approximately 5 % locking action.

8. An arrangement according to at least Claim 2, characterised in that the lower speed range lies between 0 km/h and 20 km/h and the higher speed range lies between 20 km/h and 50 km/h.

## Revendications

1. Agencement pour la commande de la transmission de la force motrice à au moins un essieu (7) d'un véhicule automobile pourvu d'un différentiel verrouillable (4), différentiel (4) dont l'effet de verrouillage peut être commandé par l'intermédiaire d'un organe de réglage (8) piloté par un appareil de commande (12) pourvu, de préférence, d'un microcalculateur, en fonction de paramètres de fonctionnement et/ou de marche du véhicule en continu et une puissance (puissance prescrite Ps) d'un moteur à combustion interne (2) servant de paramètre fonctionnel de commander caractérisé en ce que l'appareil de commande (12) applique à l'organe de réglage (8), jusqu'à une valeur de puissance (Psm) se trouvant dans la zone centrale de la gamme de puissance pouvant être fournie par le moteur à combustion interne (2) (0 inférieur à Ps inférieure ou égale à Psmax) une première valeur (mq'h) correspondant à un taux de verrouillage supérieur d'une première grandeur de commande (mq' ) et, au-dessus de cette valeur de puissance (Psm), une seconde valeur (mq'n), correspondant à un taux de verrouillage inférieur, d'une grandeur de commande (mq').

2. Agencement selon la revendication 1, caractérisé en ce qu'il s'ajoute, comme autre paramètre de commande, le paramètre de marche vitesse du véhicule (vf ), l'effet de verrouillage étant supprimé dans un premier intervalle de vitesses bas (0 inférieur ou égal à vf inférieure ou égale à vfa) et, dans un second intervalle de vitesses supérieur (vfa inférieure à vf inférieure ou égale à vfb), la grandeur de commande (mq') augmentant à partir de (0), avec l'augmentation de la vitesse (vf), jusqu'à la grandeur de commande correspondant au taux de verrouillage prédéterminé en fonction de la puissance (mq' = mq'n, mq' = mq'h).

3. Agencement selon la revendication 1 ou 2, caractérisé en ce qu'à la grandeur de commande (mq') est superposée une seconde grandeur de commande (mq") qui dépend au moins d'une fonction de la différence de vitesses de rotation (dnq) sur les arbres de sortie (7) du différentiel (4).

4. Agencement selon la revendication 3, caractérisé en ce que l'autre grandeur de commande (mq") dépend, en plus, d'une fonction de puissance et/ou d'une différence de vitesses de rotation (dnl) entre les roues de deux essieux du véhicule à moteur et/ou d'un angle de braquage (thêta).

5. Agencement selon la revendication 3 ou 4, caractérisé en ce que la fonction de la différence de vitesses de rotation (dnq) correspond à une puissance, de préférence le carré, de la différence de vitesses de rotation (dnq) sur Les arbres de sortie (7) du différentiel (4).

6. Agencement selon l'une au moins des revendications 3 à 5 qui précèdent, caractérisé en ce que l'organe de réglage (8) est attaqué avec la plus forte valeur des deux grandeurs de commande (mq', mq") dans chaque cas.

7. Agencement selon l'une au moins des revendications précédentes, caractérisé en ce que la valeur de puissance (Psm) est voisine d'environ 50%, le taux de verrouillage supérieur est de 20% d'effet de verrouillage et le taux de verrouillage et le taux de verrouillage inférieur de 5% d'effet de verrouillage.

8. Agencement selon la revendication 2, caractérisé en ce que l'intervalle de vitesses inférieur est compris entre 0km/h et 20km/h et l'intervalle de vitesses supérieur entre 20km/h et 50km/h.

EP 0 288 665 B1

FIG.1

FIG.2

FIG. 3

FIG. 4

```
         ┌──────────┐
         │  Anfang  │──~36
         └────┬─────┘
         ┌────┴─────────┐
         │Initialisierung│──~37
         └────┬─────────┘
    38~    ┌──┴──┐
           │  A  │
           └──┬──┘
     ┌────────┴─────────┐
     │Meßwerterfassung   │──~39
     │nm, alpha, vfl, vfr│
     └────────┬─────────┘
     ┌────────┴─────────┐
     │Meßwertverarbeitung│──~40
     │Ps= f(nm,alpha)    │
     │vf=f(vfl,vfr)      │
     └────────┬─────────┘
   41~      ╱──┴──╲           j
      n  ╱   Ps>Psm  ╲────────────┐
    ╱──────╲ ╲   ?  ╱              │
44~  ╱  ?   ╲ ╲────╱               │
   ╱ vf<vfa  ╲   n                 │
   ╲        ╱───────────┐          │
    ╲──────╱  n    46~  │          │
      j        ╱────┴────╲  j      │
              ╱  vf>vfb   ╲────┐   │
              ╲    ?     ╱     │   │
   ~45  ~48    ╲────────╱      ~47  ~42
  ┌─────┐ ┌──────────┐ n  ┌────────┐ ┌────────┐
  │mq'=0│ │mq'=f(vf-vfa)│ │mq'=mq'h│ │mq'=mq'n│
  └──┬──┘ └─────┬────┘    └───┬────┘ └───┬────┘
     │          │             │          │
     └──────────┴──────┬──────┴──────────┘
                    ┌──┴──┐
                    │  B  │──~43
                    └──┬──┘
           ┌───────────┴──────┐
           │Meßwerterfassung   │──~50
           │vrl,vrr            │
           └──────────┬───────┘
           ┌──────────┴───────┐
           │Meßwertverarbeitung│──~51
           │dnq=f(vrl,vrr)     │
           └──────────┬───────┘
              ┌────────┴────────┐
              │  mq''=f(dnq)    │──~52
              └────────┬────────┘
                     ~53
              j  ╱────┴────╲  n
          ┌──────  mq''>mq'  ──────┐
          │     ╲──────────╱       │
    ┌─────┴────┐            ┌───────┴──┐
    │ mq=mq''  │──~54       │ mq=mq'   │──~55
    └─────┬────┘            └───────┬──┘
  49~     │                         │
┌─────────┴──────┐        ┌─────────┴──────┐
│ Ausgabe mq=mq' │        │  Ausgabe mq    │──~56
└────────────────┘        └────────────────┘
```